# EUROPÄISCHE PATENTSCHRIFT

(11) **EP 3 700 967 B1**
(45) Veröffentlichungstag und Bekanntmachung des Hinweises auf die Patenterteilung: **03.04.2024**
(21) Anmeldenummer: 18792930.2
(22) Anmeldetag: 24.10.2018
(51) Int. Cl.: C08J 3/12, C04B 28/02, C04B 40/00, C04B 103/00, C04B 28/14

(54) **SPRÜHTROCKNUNGSVERFAHREN**
SPRAY DRYING METHOD
PROCÉDÉ DE SÉCHAGE PAR PULVÉRISATION

(30) Priorität: 27.10.2017 EP 17198744
(43) Veröffentlichungstag der Anmeldung: 02.09.2020
(73) Patentinhaber: BASF SE, 67056 Ludwigshafen (DE)
(72) Erfinder: GAEDT, Torben, 83308 Trostberg (DE); DENGLER, Joachim, 83308 Trostberg (DE); BICHLER, Manfred, 83308 Trostberg (DE)
(74) Vertreter: BASF IP Association
(86) Internationale Anmeldenummer: PCT/EP2018/079092
(87) Internationale Veröffentlichungsnummer: WO 2019/081548

(56) Entgegenhaltungen:
- EP-A2- 2 695 866
- WO-A1-2006/042709
- WO-A1-2010/026155
- WO-A1-2014/114784
- WO-A1-2015/091461
- WO-A1-2016/169981

## Beschreibung

Die vorliegende Erfindung betrifft ein Verfahren zur Herstellung einer pulverförmigen Zusammensetzung enthaltend mindestens ein polymeres Dispergiermittel (PD), welches Struktureinheiten mit anionischen und/oder anionogenen Gruppen und Struktureinheiten mit Polyetherseitenketten umfasst, und mindestens ein Polysaccharid (PS). Weiterhin eine pulverförmige Zusammensetzung erhalten aus dem Verfahren und die Verwendung der pulverförmigen Zusammensetzung als rheologisches Additiv.

In "R. Bayer, H. Lutz, Dry Mortars, Ullmann's Encyclopedia of Industrial Chemistry, 6th ed., vol. 11, Wiley-VCH, Weinheim, (2003), 83-108" wird ein Überblick über die Anwendungen und Zusammensetzung von Trockenmörteln, wie Binder, Aggregate und verschiedene Zusätze gegeben. Insbesondere sind durch Zusätze (oft auch Zusatzmittel genannt) wie redispergierbare Polymerpulver, Fließmittel und/oder Celluloseether, polymervergütete zementäre Trockenmischungen erhältlich. Die Trockenmörtelmischungen zeichnen sich dadurch aus, dass durch die Auswahl der Zusätze eine maßgeschneiderte Anpassung an verschiedene Anwendungsprofile eingestellt werden kann, während auf der Baustelle nur noch in einfacher und sicherer Weise Wasser zu der fertigen Trockenmörtelmischung zugegeben werden muss.

Als wichtiger Zusätze sind Polysaccharide zu nennen, welche neben der Wasserrückhaltung vor allem auch zur Einstellung von rheologischen Eigenschaften der entsprechenden Baustoffmischungen, beispielsweise der Viskosität und / oder der Thixotropie dienen. Thixotrope Eigenschaften sind beispielsweise bei Fliesenklebemörteln zur Verbesserung des Abrutschwiderstands bei gleichzeitig guter Korrigierbarkeit der Lage von Fliesen notwendig. Bevorzugt sind beispielsweise Celluloseether, nichtionische Stärkeether oder auch mikrobiologisch hergestellte Polysaccharide.

Als weiteres Zusatzmittel spielen Dispergiermittel eine bedeutende Rolle in Trockenmörtelmischungen. Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement oder hydraulischer Kalk, bzw. latenthydraulische Bindemittel wie Flugasche, Hochofenschlacke oder Puzzolane enthalten, ausgenutzt. Auch für auf Calciumsulfat basierende Bindemittelsysteme, wie Halbhydrat oder Anhydrit, werden diese Dispergiermittel eingesetzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche beispielsweise durch radikalische Copolymerisation von Säuremonomeren mit Polyethermakromonomeren oder durch Polykondensation aromatischer Monomere, welche Polyether und anionische Gruppen umfassen, hergestellt werden.

Es ist auch bekannt, dass Mischungen pulverförmiger Stoffe zur Segregation neigen, insbesondere wenn die spezifische Dichte, die Korngröße und/oder die Oberflächeneigenschaften verschieden sind. Dieses Problem tritt besonders bei frei fließenden (rieselfähigen) Pulvern relativ häufig auf. Dadurch kann es zu einer inhomogenen Verteilung der Zusatzmittel im Trockenmörtel kommen, was zu inakzeptabel unterschiedlichen Eigenschaften von Proben aus demselben Trockenmörtelsack führen kann, aber auch produktionsbedingt zu unterschiedlicher Qualität verschiedener lots im Herstellungsprozess. Beispielsweise würde ein Überschuss an Dispergiermittel zu einem Bluten" der frisch mit Wasser angerührten Baustoffmischung führen, verbunden mit einer Segregation der Aggregate, des Bindemittels Zement und des Anmachwassers. Ein Überschuss an die Viskosität erhöhendem Zusatzmittel, wie beispielsweise Celluloseether, würde wiederum zu einem unverhältnismäßig starken Andicken der Baustoffmischung und damit zu einer mangelnden Verarbeitbarkeit im frischen Zustand führen.

Um diesen Problemen zu begegnen, die die Qualität, insbesondere die Anwendungssicherheit einer Trockenmörtelmischung sehr stark beeinträchtigen, wurden im Stand der Technik verschiedene Lösungswege offenbart. Beispielsweise kann die Packungsdichte des Trockenmörtels entsprechend angepasst werden, um möglichst geringe Hohlräume im Mörtel zu erzeugen. Nachteil dieser Methode ist, dass die Kornbänder des Mörtels extrem gut aufeinander abgestimmt werden müssen, was mit der heutigen, oft stark schwankenden, Rohstoffqualität nicht oder nur sehr schwer möglich ist. Des Weiteren leidet so auch die Fließfähigkeit des Pulvers. Eine weitere Möglichkeit ist, die Dichte der einzelnen Rheologieadditive mit weiteren Salzen aufeinander anzupassen und die Pulver mit identischer Korngrößenverteilung herzustellen. Nachteil dieser Methode ist ihre hohe technische Komplexität (sehr hoher Optimierungsaufwand), da unterschiedliche Trocknungsmethoden und zu trocknende Ausgangssubstrate in kaum vorhersehbarer Weise unterschiedliche Partikelgrößen und Partikelgrößenverteilungen liefern.

EP 2695866 betrifft ein Verfahren zur Herstellung eines pulverförmigen Trockenmörteladditivs, welches Kalziumsilikathydrat und eines oder mehrere Rheologieadditive ausgewählt aus redispergierbaren Polymerpulvern und / oder modifizierten Polysacchariden enthält, wobei das oder die Rheologieadditiv(e) in pulverförmiger Form mit einer wässrigen Suspension von Kalziumsilikathydrat in Kontakt gebracht wird. Weiterer Gegenstand sind Trockenmörteladditive, welche aus dem erfindungsgemäßen Verfahren erhältlich sind sowie deren Verwendung in Baustoffmischungen und Baustoffmischungen enthaltend die Trockenmörteladditive.

Ein weiteres Problem im Stand der Technik ist, dass auf Polysacchariden basierende Rheologieadditive, wie beispielsweise Celluloseether, nur relativ aufwändig in Pulverform überführt werden können. Im Allgemeinen geschieht dies mittels Walzentrocknung und anschließendem Vermahlen der erhaltenen, eher grobteiligen Trockenmasse Oft sind diese Massen auch schuppenförmig und kantig, was sich ebenfalls negativ auf die Fließfähigkeit der Pulverprodukte auswirkt.

Ziel dieser Erfindung war es ein Verfahren anzugeben, welches in einfacher, sicherer und effektiver Weise erlaubt die vorstehend beschriebenen Nachteile des Stands der Technik zu vermeiden und weitgehend entmischungssichere Trockenmörtelmischungen hoher Qualität (insbesondere frei fließende Pulver mit hoher Rieselfähigkeit) zur Verfügung zu stellen. Weiterhin war es Aufgabe der Erfindung ein kostengünstiges, einfaches und effektives Verfahren zur Verfügung zu stellen, welches erlaubt im industriellen Maßstab pulverförmige Zusammensetzungen, welche zumindest Polysaccharide umfassen, in einem Prozess mit einer hohen Raum -Zeit-Ausbeute darzustellen. Insbesondere sollten dabei Vermahlungsschritte, da diese zeitaufwändig und relativ teuer sind, möglichst vermieden werden.

Gelöst wird diese Aufgabenstellung durch ein Verfahren zur Herstellung einer pulverförmigen Zusammensetzung enthaltend mindestens ein polymeres Dispergiermittel (PD), welches mindestens eine Struktureinheit umfassend anionische Gruppen und/oder mindestens eine Struktureinheit umfassend anionogene Gruppen sowie mindestens eine Struktureinheit mit Polyetherseitenketten umfasst, und mindestens ein Polysaccharid (PS), wobei das Gewichtsverhältnis von polymerem Dispergiermittel (PD) zu Polysaccharid (PS) von 2/1 bis 50/1 beträgt und die pulverförmige Zusammensetzung zu mindestens 65 Gew.-% aus dem polymeren Dispergiermittel besteht und folgende Verfahrensschritte durchgeführt werden:
a) Herstellung einer wässrigen Dispersion mit einer Viskosität der Dispersion geringer als 10.000 mPa·s (gemessen mittels eines Brookfield-Viskosimeters (Spindel LV1) bei 20 °C), enthaltend das mindestens eine polymere Dispergiermittel (PD) und das mindestens eine Polysaccharid (PS),
b) Sprühtrocknung der im Verfahrensschritt a) hergestellten wässrigen Dispersion.

Gelöst wird die Aufgabe auch durch eine pulverförmige Zusammensetzung, erhalten aus dem erfindungsgemäßen Verfahren und durch eine Baustoffzusammensetzung, enthaltend die erfindungsgemäße pulverförmig Zusammensetzungen und mindestens ein anorganisches Bindemittel. Ebenso wird die Aufgabe gelöst durch die Verwendung der erfindungsgemäßen pulverförmigen Zusammensetzungen als rheologisches Additiv für Zement, Calciumsulfat-Hemihydrat, Anhydrit, Hüttensand, Flugasche, Silikastaub, Metakaolin, natürliche Puzzolane, gebrannte Ölschiefer, Calcium-Aluminat-Zement oder Calciumsulfoaluminatzement enthaltende Baustoffmischungen, als auch durch die Verwendung zur Herstellung von Trockenmörtelmischungen, um ein Entmischen des polymeren Dispergiermittels (PD) und des Polysaccharids (PS) im Trockenmörtel zu verhindern.

Die erfindungsgemäßen, aus dem Verfahren erhaltenen pulverförmigen Zusammensetzungen enthalten mindestens ein polymeres Dispergiermittel (PD), welches mindestens eine Struktureinheit umfassend anionische Gruppen und/oder mindestens eine Struktureinheit umfassend anionogene Gruppen sowie mindestens eine Struktureinheit mit Polyetherseitenketten umfasst. Die anionischen Gruppen sind nicht besonders begrenzt, umfassen aber bevorzugt Carboxylatgruppen, Phosphonatgruppen und Phosphatgruppen. Als anionische Gruppen sind auch beispielsweise Sulfonatgruppen und Sulfatgruppen möglich, diese sind aber weniger bevorzugt.

Unter dem Begriff anionogene Gruppen sollen bevorzugt chemische Gruppen verstanden werden, die durch eine chemische Reaktion, bevorzugt durch eine Hydrolysereaktion und/oder eine Säure/Base Reaktion, eine anionische Gruppe freisetzen können, bevorzugt können Carboxylate, Phosphonate oder Phosphate freigesetzt werden, insbesondere bevorzugt Carboxylate. Dies kann beispielsweise durch eine Hydrolysereaktion entsprechender Ester von Carbonsäuren, Phosphonsäuren oder Phosphorsäure erfolgen, ebenfalls durch eine Hydrolysereaktion entsprechender Säureanhydride, bspw. Maleinsäurenahydrid in einpolymerisierter Form. Im einfachsten Fall ist unter einer anionogenen Gruppe eine protonierte Säurefunktion, wie bspw. eine Carbonsäure (COOH), zu verstehen, welche in Abhängigkeit vom pH Wert des wässrigen Systems (insbesondere bei einer Erhöhung des pH Werts) zur anionischen Gruppe umgewandelt werden kann.

In dem polymeren Dispergiermittel (PD) sind auch Polyetherseitenketten umfasst, vorzugsweise sind die Polyetherseitenketten Poly (alkylenglykol) oder umfassen Poly (alkylenglykol). Insbesondere bevorzugt enthält das Poly (alkylenglykol) zu mehr als 60 mol-%, insbesondere bevorzugt mehr als 80 mol-% Poly (ethylenglykol), bezogen auf das Poly (alkylenglykol). Die Dispergiermittel (PD) werden insbesondere als Wasserreduzierer zur Steigerung der Festigkeiten hydraulischer Baustoffmischungen, bei gleicher oder verbesserter Verarbeitbarkeit, und zur Steigerung der Dauerhaftigkeit von Bauwerken aus hydraulischen Bindemitteln eingesetzt. Besonders finden die Dispergiermittel Anwendung in zementären Baustoffmischungen, wie beispielsweise Mörtel und Beton. Die polymeren Dispergiermittel (PD) verringern überraschenderweise die Viskosität von Dispersionen von Polysacchariden und ermöglichen somit ein effizientes Sprühtrocknen. Weitere Details zu den Dispergiermitteln (DP) sind im folgenden Text und den Ansprüchen zu finden.

Die Polysaccharide (PS) in der erfindungsgemäßen Zusammensetzung dienen zur Einstellung der rheologischen Eigenschaften der entsprechenden Baustoffmischungen, beispielsweise der Viskosität und der Thixotropie im frischen Zustand. Auch dienen sie als Wasserretentionsmittel um zu verhindern, dass durch beispielsweise saugende Substrate oder Untergründe dem hydraulischen Bindemittel vorzeitig zum Abbinden notwendiges Wasser entzogen wird. Die Polysaccharide sind bevorzugt wasserlöslich, bevorzugt ist die Wasserlöslichkeit größer als 1 g/l, insbesondere bevorzugt größer als 5 g/l. Insbesondere bevorzugt beträgt die Wasserlöslichkeit von 10 g/l bis 20 g/l.

Die vorstehend angegebenen Wasserlöslichkeiten werden in destilliertem Wasser bei 20 °C und Normaldruck bestimmt.

Bevorzugt als Polysaccharide (PS) sind Celluloseether, beispielsweise Alkylcellulosen wie Methylcellulose, Ethylcellulose, Propylcellulose und Methylethylcellulose, Hydroxyalkylcellulosen wie Hydroxyethylcellulose (HEC), Hydroxypropylcellulose (HPC) und Hydroxyethylhydroxypropylcellulose, Alkylhydroxyalkylcellulosen wie Methylhydroxyethylcelluose (MHEC), Methylhydroxypropylcelluose (MHPC) und Propylhydroxypropylcellulose. Bevorzugt sind die Celluloseetherderivate Methylcellulose (MC), Hydroxypropylcellulose (HPC), Hydroxyethylcellulose (HEC) und Ethylhydroxyethylcellulose (EHEC), besonders bevorzugt sind Methylhydroxyethylcelluose (MHEC) und Methylhydroxypropylcelluose (MHPC). Die vorstehend genannten Celluloseetherderivate, welche jeweils durch eine entsprechende Alkylierung oder Alkoxylierung von Cellulose erhältlich sind, liegen bevorzugt als nichtionische Strukturen vor. Nichtionische Polysaccharide sind gegenüber ionischen Polysacchariden bevorzugt.

Daneben kommen auch bevorzugt nichtionische Stärkeetherderivate zum Einsatz, wie zum Beispiel Hydroxypropylstärke, Hydroxyethylstärke und Methylhydroxypropylstärke. Bevorzugt ist die Hydroxypropylstärke. Die Stärkeetherderivate liegen in der Trockenmischung entweder alleine, bevorzugt aber in Kombination mit einem oder mehreren der vorstehend genannten Celluloseetherderivate vor, besonders bevorzugt liegen sie zusammen mit Methylhydroxyethylcelluose (MHEC) und/oder Methylhydroxypropylcelluose (MHPC) vor.

Bevorzugt sind mikrobiell erzeugte Polysaccharide wie welan gum, xanthan gum oder diutan gum, wobei die jeweiligen Polysaccharide einzeln oder in Mischungen verwendet werden können.

Es ist auch möglich natürlich vorkommende Polysaccharide, wie zum Beispiel Alginate, Carrageenane und Galactomannane zu verwenden. Bevorzugt sind diese natürlich vorkommenden Polysaccharide pflanzlichen Ursprungs. Diese können aus entsprechenden Naturprodukten, bspw. Algen oder Pflanzen, insbesondere Pflanzensamen, durch extraktive Verfahren gewonnen werden. Beispielsweise im Falle der Alginate und Carrageenane aus Algen, im Falle der Galactomannane von Johannisbrotbaumkernen und auch aus der Guarbohne. Es ist auch möglich Polysaccharide (PS) einzusetzen, welches aus Fungus Kulturen gewonnen wurden.

Es können eines oder auch mehrere der vorstehend genannten Typen von Polysacchariden, sowohl als auch mehrere Vertreter dieser Typen eingesetzt werden.

In der hydraulisch abbindenden Trockenmischung liegen die auf Polysaccharidstrukturen basierenden Wasserrententionsmittel bezogen auf die Trockenmischung von 0,01 bis 1,5 Gew.-% vor, bevorzugt von 0,05 bis 1,2 Gew.-%, besonders bevorzugt von 0,1 bis 1,0 Gew.-%.

Das Gewichtsverhältnis von polymerem Dispergiermittel (PD) zu Polysaccharid (PS) beträgt von 2/1 bis 50/1, bevorzugt 25/1 bis 50/1, besonders bevorzugt von 30/1 bis 40/1. Die Verwendung von wenig Dispergiermittel (PD) gegenüber dem Polysaccharid (PS) führt tendenziell zu eher höheren Viskositäten der erhaltenen Sprühspeise, was ein effizientes Sprühtrocknen erschwert. Andererseits führt die Verwendung von wenig Polysaccharid (PS) gegenüber dem Dispergiermittel (PD) zu einer relativ geringen Raum-Zeit Ausbeute in Bezug auf das Polysaccharid und folglich zu relativ niedrigen Viskositäten in der Anwendung, was ein Nachteil in Bezug auf die Sedimentationsrobustheit ist.

In einer besonders bevorzugten Ausführungsform beträgt das Gewichtsverhältnis von polymerem Dispergiermittel (PD) zu Polysaccharid (PS) 3/1 bis 50/1, besonders bevorzugt von 9/1 bis 40/1 und die pulverförmige Zusammensetzung besteht zu mindestens 65 Gew.-%, bevorzugt mindestens 75 Gew.-%, besonders bevorzugt mindestens 85 Gew.-% aus dem polymeren Dispergiermittel.

In dem erfindungsgemäßen Verfahren werden die folgenden Schritte durchgeführt:
a) Herstellung einer wässrigen Dispersion mit einer Viskosität der Dispersion geringer als 10.000 mPas, enthaltend das mindestens eine polymere Dispergiermittel (PD) und das mindestens eine Polysaccharid (PS) und
b) Sprühtrocknung der im Verfahrensschritt a) hergestellten wässrigen Dispersion.

Bevorzugt ist die Viskosität der im Schritt a) erhaltenen Dispersion geringer als 5.000 mPas, besonders bevorzugt geringer als 2.000 mPas. Eine geringe Viskosität erleichtert das Sprühtrocknungsverfahren, insbesondere wird vermieden, dass sich zu große Tropfen im Sprühtrockner bilden, welche in der Fallzeit des Trockners nicht austrocknen. Eine zu hohe Viskosität erschwert das Versprühen der Lösung.

Bevorzugt ist der Feststoffgehalt der im Schritt a) erhaltenen Dispersion größer als 25 Gew.-%, besonders bevorzugt größer als 30 Gew.-% und insbesondere bevorzugt von 35 Gew.-% bis 55 Gew.-%.

Sprühtrocknung ist eine Methode um Trockenpulver aus Flüssigkeiten oder Dispersionen auf schonende und effektive Weise herzustellen. Der Verfahrensschritt b) Sprühtrocknung der im Verfahrensschritt a) hergestellten wässrigen Dispersion erfolgt vorzugsweise bei einer Eingangstemperatur im Bereich von 120 bis 300 °C und einer Ausgangstemperatur im Bereich von 60 bis 120 °C. Die Trocknung erfolgt durch ein Trockengas, welches die vorstehend genannte Eingangstemperatur aufweist.

Zur Durchführung des erfindungsgemäßen Verfahrens eignen sich im Prinzip alle herkömmlichen Sprühtrocknungsvorrichtungen. Geeignete Sprühdüsen sind Einstoffdüsen, sowie Mehrkanaldüsen wie Zweistoffdüsen, Dreikanaldüsen oder Vierkanaldüsen. Solche Düsen können auch als sogenannte "Ultraschalldüsen" ausgestaltet sein. Derartige Düsen sind kommerziell erhältlich.

Weiterhin kann je nach Düsentyp auch ein Zerstäubungsgas zugeführt werden. Als Zerstäubungsgas kann Luft oder ein Inertgas wie Stickstoff oder Argon eingesetzt werden. Der Gasdruck des Zerstäubungsgases kann bevorzugt bis zu 1 MPa absolut, vorzugsweise 0,12 bis 0,5 MPa absolut betragen.

Eine Ausführungsform der Erfindung betrifft Ultraschalldüsen. Ultraschalldüsen können mit oder ohne Zerstäubungsgas betrieben werden. Bei Ultraschalldüsen erfolgt die Zerstäubung dadurch, dass die zu zerstäubende Phase in Schwingungen versetzt wird. Je nach Düsengröße und Ausführung können die Ultraschalldüsen mit einer Frequenz von 16 bis 120 kHz betrieben werden.

Der Durchsatz an zu versprühender Flüssigphase pro Düse richtet sich nach der Düsengröße. Der Durchsatz kann 500 g/h bis 1000 kg/h Lösung oder Suspension betragen. Bei der Herstellung kommerzieller Mengen liegt der Durchsatz vorzugsweise im Bereich von 10 bis 1000 kg/h.

Wenn kein Zerstäubungsgas verwendet wird, so kann der Flüssigkeitsdruck 0,2 bis 40 MPa absolut betragen. Wird ein Zerstäubungsgas verwendet so kann die Flüssigkeit drucklos zugeführt werden.

Weiterhin wird der Sprühtrocknungsvorrichtung ein Trocknungsgas wie Luft oder eines der erwähnten Inertgase zugeführt. Das Trocknungsgas kann im Gleich- oder im Gegenstrom zu der versprühten Flüssigkeit zugeführt werden, vorzugsweise im Gleichstrom. Die Eingangstemperatur des Trocknungsgases kann 120 bis 300 °C, vorzugsweise 150 bis 230 °C betragen, die Ausgangstemperatur 60 bis 135 °C.

Wie bereits erwähnt, richten sich die Größenordnungen der zu verwendenden Sprühparameter wie Durchsatz, Gasdruck oder Düsendurchmesser entscheidend nach der Größe der Vorrichtungen. Die Vorrichtungen sind kommerziell erhältlich und üblicherweise werden vom Hersteller entsprechende Größenordnungen empfohlen.

Erfindungsgemäß wird das Sprühverfahren vorzugsweise so betrieben, dass die mittlere Tropfengröße der versprühten Phasen 5 bis 2.000 µm, bevorzugt 5 bis 500 µm, besonders bevorzugt 5 bis 200 µm, beträgt. Die mittlere Tropfengröße kann mittels Laserbeugung oder Hochgeschwindigkeitskameras gekoppelt mit einer Bildauswertung ermittelt werden.

Die vorstehenden Ausführungen zum Sprühverfahren können auf alle nachfolgend geschilderten bevorzugten und besonders bevorzugten Ausführungsformen angewendet werden. Bevorzugte Sprühparameter sind auch im Zusammenhang mit den nachstehenden Ausführungsformen bevorzugt.

Bevorzugt ist ein Verfahren, wobei das polymere Dispergiermittel (PD) ein Polymer ist, bevorzugt ein Copolymer ist, das erhalten wurde durch Polymerisation, bevorzugt radikalische Polymerisation ethylenisch ungesättigter Monomere, mindestens eines Monomers, das mindestens eine anionische und/oder mindestens eine anionogene Gruppe aufweist, und mindestens eines Monomers, das mindestens eine Polyetherseitenkette umfasst.

Bevorzugt ist die anionische Gruppe ausgewählt aus Carboxylat, Phosphonat oder Phosphat, besonders bevorzugt Carboxylat und/oder Phosphat, wobei eine oder mehrere der anionischen Gruppen Carboxylat, Phosphonat, Phosphat im Dispergiermittel (PD) vorliegen können.

Bevorzugt ist die anionogene Gruppe ausgewählt aus Carbonsäureestern, Phosphonsäureestern oder Phosphorsäureestern, besonders bevorzugt Carbonsäureestern und/oder Phosphorsäureestern, wobei eine oder mehrere der Estergruppen Carbonsäureester, Phosphonsäureester oder Phosphorsäureester im Dispergiermittel (PD) vorliegen können. Es ist auch möglich, dass im polymeren Dispergiermittel (PD) anionische und anionogene Gruppe vorliegen, beispielsweise aus der Einpolymerisierung von anionischen Monomeren und anionogenen Monomeren.

Als Beispiel für eine Struktureinheit mit mehr als einer anionischen Gruppe, wäre das Salz der Maleinsäure in einpolymerisierter Form zu nennen und als Beispiel für ein Monomer umfassend eine anionische und eine anionogene Gruppe wären hydrolysefähige Halbester der Maleinsäure anzuführen. Monomereinheiten, umfassend zwei anionogene Gruppen wären beispielsweise hydrolysefähige Diester der Maleinsäure.

Die in dem erfindungsgemäßen Verfahren eingesetzten Dispergiermittel (PD) sind Polymere, vorzugsweise Copolymere, und weisen Struktureinheiten mit anionischen und/oder anionogenen Gruppen sowie Struktureinheiten mit Polyetherseitenketten auf. Vorzugsweise werden in dem Verfahren Dispergiermittel eingesetzt, die Copolymere sind und aus einer radikalischen Polymerisation ethylenisch ungesättigter Monomere stammen, wobei einerseits Monomere mit Struktureinheiten umfassend anionische und/oder anionogene Gruppen zum Einsatz kommen und andererseits Monomere mit Struktureinheiten umfassend Polyetherseitenketten.

Ebenso ist es möglich Copolymere aus Polykondensationsreaktionen einzusetzen, welche Struktureinheiten mit anionischen und/oder anionogenen Gruppen und Struktureinheiten mit Polyetherseitenketten aufweisen, beispielsweise Polykondensate von aromatischen Verbindungen mit (Form)aldehyd. Insbesondere umfassen die dabei neben Aldehyden, bevorzugt Formaldehyd, eingesetzten aromatischen Monomere einerseits eine Polyetherseitenkette (bspw. alkoxyliertes Phenol) und andererseits eine Phosphatgruppe (bspw. Phenoxyethanolphosphat). Solche Polykondensate sind beispielsweise beschrieben in der Internationalen Patentanmeldung WO 2006/042709 A1.

Unter den anionischen Gruppen sollen in dieser Erfindung bevorzugt Carboxylate, Phosphonate oder Phosphate verstanden werden, wobei die polymeren Dispergiermittel (PD) nur eine der drei anionischen Gruppen oder auch mehrere umfassen können. Carboxylate und/oder Phosphate sind als anionische Gruppen besonders bevorzugt. Mit dem Begriff anionogene Gruppen sollen bevorzugt chemische Gruppen verstanden werden, die durch eine chemische Reaktion, bevorzugt durch eine Hydrolysereaktion, Carboxylate, Phosphonate oder Phosphate freisetzen, beispielsweise durch eine Hydrolysereaktion entsprechender Ester von Carbonsäuren, Phosphonsäuren oder Phosphorsäure, ebenfalls durch eine Hydrolysereaktion entsprechender Säureanhydride, wie beispielsweise Maleinsäureanhydrid in einpolymerisierter Form. Die anionogene Gruppe ist bevorzugt ein Carbonsäureanhydrid oder ein Carbonsäureester, welcher nach entsprechender Hydrolysereaktion zu einer mindestens eine Carboxylatgruppe umfassenden Struktur führt.

Bevorzugt ist ein Verfahren, wobei das polymere Dispergiermittel (PD) mindestens eine Struktureinheit der allgemeinen Formeln (Ia), (Ib), (Ic) oder (Id) aufweist: 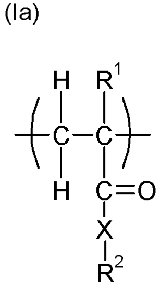 worin
- R¹: für H oder eine unverzweigte oder verzweigte C₁-C₄-Alkylgruppe, CH₂COOH oder CH₂CO-X-R³ steht;
- X: für NH-(CₙH₂ₙ) oder O-(CₙH₂ₙ) mit n = 1, 2, 3 oder 4 oder für eine chemische Bindung steht, wobei das Stickstoffatom bzw. das Sauerstoffatom an die CO-Gruppe gebunden ist;
- R²: für OM, PO₃M₂, oder O-PO₃M₂ steht; mit der Maßgabe, dass X für eine chemische Bindung steht, wenn R² für OM steht;
- R³: für PO₃M₂, oder O-PO₃M₂ steht; 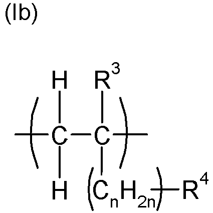
worin
- R³: für H oder eine unverzweigte oder verzweigte C₁-C₄-Alkylgruppe steht;
- n: für 0, 1, 2, 3 oder 4 steht;
- R⁴: für PO₃M₂, oder O-PO₃M₂ steht; 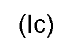 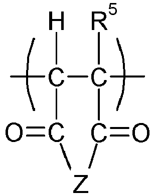
worin
- R⁵: für H oder eine unverzweigte oder verzweigte C₁-C₄-Alkylgruppe steht;
- Z: für O oder NR⁷ steht; und
- R⁷: für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
- n: für 1, 2, 3 oder 4 steht; 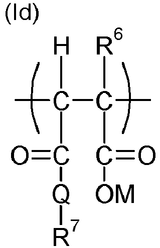
worin
- R⁶: für H oder eine unverzweigte oder verzweigte C₁-C₄-Alkylgruppe steht;
- Q: für NR⁷ oder O steht;
- R⁷: für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht, n für 1, 2, 3 oder 4 steht; und
wobei jedes M unabhängig voneinander für H oder ein Kationäquivalent steht.

Der Begriff Kationäquivalent in dieser Patentanmeldung bedeutet vorzugsweise jede Art von Kation (mit Ausnahme des Hydroniumions), wobei das Kation ohne seine Ladung angegeben wird und durch seine Ladungszahl geteilt wird. Die Art des Kations ist nicht speziell limitiert, mit Ausnahme des Hydroniumions.

Bevorzugt sind Alkalimetallkationen, (Alkyl)ammoniumkationen, Alkanolammoniumkationen, ½ Erdalkalimetallkationen, 1/3 Al, Übergangsmetallkationen mit einer Ladungszahl von 2 oder 3, vorzugsweise1/3 Fe, ½ Fe or ½ Zn. Beispielsweise im Fall von Alkalikationen bedeutet das Kationenäquivalent Li, Na oder K, da die Ladungszahl 1 beträgt. Für Erdalkalimetallkationen mit zwei Ladungen ergibt sich beispielsweise ½ Mg, ½ Ca, ½ Ba und so weiter, für dreifach geladene Kationen wie beispielsweise Al³⁺ oder Fe³⁺ ergibt sich entsprechend 1/3 AI oder 1/3 Fe.

Besonders bevorzugt ist M ausgewählt aus der Gruppe H, Li, Na, K, ½ Mg, ½ Ca, ½ Ba, ½ Zn, 1/3 Al, ½ Fe oder 1/3 Fe.

Bevorzugt ist ein Verfahren, wobei das polymere Dispergiermittel (PD) mindestens eine Struktureinheit der allgemeinen Formeln (IIa), (IIb), (IIc) oder (IId) aufweist: 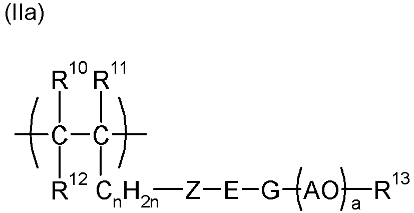 worin
- R¹⁰, R¹¹ und R¹²: unabhängig voneinander für H oder eine unverzweigte oder verzweigte C₁-C₄-Alkylgruppe stehen;
Z für O oder S steht;
- E: für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht;
- G: für O, NH oder CO-NH steht; oder
- E und G: gemeinsam für eine chemische Bindung stehen;
- A: für CₓH₂ₓ mit x = 2, 3, 4 oder 5 oder CH₂CH(C₆H₅) steht;
- n: für 0, 1, 2, 3, 4 und/oder 5 steht;
- a: für eine ganze Zahl von 2 bis 350 steht;
- R¹³: für H, eine unverzweigte oder verzweigte C₁-C₄-Alkylgruppe, CO-NH₂ und/oder COCH₃ steht; 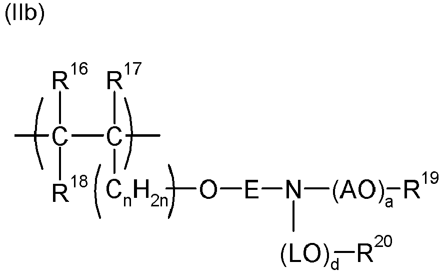
worin
- R¹⁶, R¹⁷ und R¹⁸: unabhängig voneinander für H oder eine unverzweigte oder verzweigte C₁-C₄-Alkylgruppe stehen;
- E: für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht oder für eine chemische Bindung steht;
- A: für CₓH₂ₓ mit x = 2, 3, 4 oder 5 oder CH₂CH(C₆H₅) steht;
- L: für CₓH₂ₓ mit x = 2, 3, 4 oder 5 oder CH₂-CH(C₆H₅) steht;
- a: für eine ganze Zahl von 2 bis 350 steht;
- d: für eine ganze Zahl von 1 bis 350 steht;
- R¹⁹: für H oder eine unverzweigte oder verzweigte C₁-C₄-Alkylgruppe steht;
- R²⁰: für H oder eine unverzweigte oder verzweigte C₁-C₄-Alkylgruppe steht; und
- n: für 0, 1, 2, 3, 4 oder 5 steht; 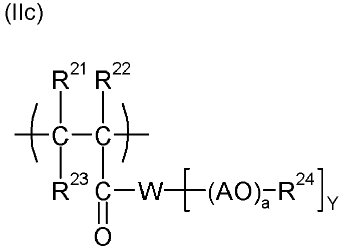
worin
- R²¹, R²² und R²³: unabhängig voneinander für H oder eine unverzweigte oder verzweigte C₁-C₄-Alkylgruppe stehen;
- W: für O, NR²⁵, N steht
- Y: für 1 steht, wenn W = O oder NR²⁵, und für 2 steht, wenn W = N;
- A: für CₓH₂ₓ mit x = 2, 3, 4 oder 5 oder CH₂CH(C₆H₅) steht;
- a: für eine ganze Zahl von 2 bis 350 steht;
- R²⁴: für H oder eine unverzweigte oder verzweigte C₁-C₄-Alkylgruppe steht;
- R²⁵: für H oder eine unverzweigte oder verzweigte C₁-C₄-Alkylgruppe steht; 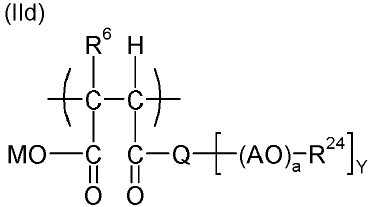
worin
- R⁶: für H oder eine unverzweigte oder verzweigte C₁-C₄-Alkylgruppe steht;
- Q: für NR¹⁰, N oder O steht;
- Y: für 1 steht, wenn Q = O oder NR¹⁰ und für 2 steht, wenn Q = N;
- R¹⁰: für H oder eine unverzweigte oder verzweigte C₁-C₄-Alkylgruppe steht;
- A: für CₓH₂ₓ mit x = 2, 3, 4 oder 5, oder CH₂C(C₆H₅)H steht;
- R²⁴: für H oder eine unverzweigte oder verzweigte C₁-C₄-Alkylgruppe steht;
- M: für H oder ein Kationäquivalent steht; und
- a: für eine ganze Zahl von 2 bis 350 steht.

Bevorzugt ist ein Verfahren, wobei das polymere Dispergiermittel (PD) mindestens ein Polymer umfasst, das ein Polykondensationsprodukt ist, welches Struktureinheiten (III) und (IV) umfasst: 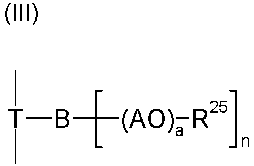 worin
- T: für einen substituierten oder unsubstituierten Phenylrest, einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind aus N, O und S, steht;
- n: für 1 oder 2 steht;
- B: für N, NH oder O steht, mit der Maßgabe, dass n für 2 steht, wenn B für N steht und der Maßgabe, dass n für 1 steht, wenn B für NH oder O steht;
- A: für CₓH₂ₓ mit x = 2, 3, 4 oder 5 oder CH₂CH(C₆H₅) steht;
- a: für eine ganze Zahl von 1 bis 300 steht;
- R²⁵: für H, einen verzweigten oder unverzweigten C₁- bis C₁₀-Alkylrest, C₅- bis C₈-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb): 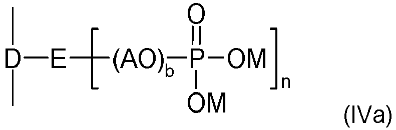 worin
- D: für einen substituierten oder unsubstituierten Phenylrest,einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind aus N, O und S, steht;
- E: für N, NH oder O steht, mit der Maßgabe, dass m für 2 steht, wenn E für N steht und der Maßgabe, dass m für 1 steht, wenn E für NH oder O steht;
- A: für CₓH₂ₓ mit x = 2, 3, 4 oder 5 oder CH₂CH(C₆H₅) steht;
- b: für eine ganze Zahl von 1 bis 300 steht;
- M: unabhängig voneinander für H oder ein Kationäquivalent stehen; 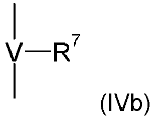
worin
- V: für einen substituierten oder unsubstituierten Phenylrest oder einen substituierten oder unsubstituierten Naphthylrest steht;
- R⁷: für COOM, OCH₂COOM, SO₃M oder OPO₃M₂ steht;
- M: für H oder ein Kationäquivalent steht;
wobei die erwähnten Phenyl-, Naphthyl- oder heteroaromatischen Reste gegebenenfalls durch 1 oder zwei Reste substituiert sind, die ausgewählt sind aus R⁸, OH, OR⁸, (CO)R⁸, COOM, COOR⁸, SO₃R⁸ und NO₂; und
und
- R⁸: für C₁-C₄-Alkyl, Phenyl, Naphthyl, Phenyl-C₁-C₄-alkyl oder C₁-C₄-Alkylphenyl steht.

Bevorzugt ist ein Verfahren, wobei die Ladungsdichte des polymeren Dispergiermittels (PD) von 1,65 mEq/g bis 10,0 mEq/g beträgt, bevorzugt beträgt die Ladungsdichte des polymeren Dispergiermittels (PD) von 2,0 mEq/g bis 4,0 mEq/g.

Eine zu geringe Ladungsdichte des polymeren Dispergiermittels (PD) ist weniger effektiv, weil die Viskosität der Dispersion des Polysaccharids (PD) nicht so effektiv reduziert werden kann. Hohe Ladungsdichten haben einen zu schnellen Verlust der Dispergiereffizienz in der Anwendung sowie eine zu starke Verzögerung der anorganischen Bindemittel zur Folge.

Bevorzugt ist ein Verfahren, wobei im Verfahrensschritt a) die Herstellung der wässrigen Dispersion dadurch geschieht, dass eine wässrige Lösung des polymeren Dispergiermittels (PD), welche mehr als 70 %, bevorzugt mehr als 80 %, insbesondere bevorzugt mehr als 90 %, des eingesetzten polymeren Dispergiermittels (PD) umfasst, vorgelegt wird und zu der wässrigen Lösung des polymeren Dispergiermittels (PD) das Polysaccharid (PS) zugegeben wird. Das Polysaccharid (PS) kann in fester oder gelöster Form oder auch in gequollener Form zugegeben werden, bevorzugt wird es in fester Form zugegeben. Es ist vorteilhaft das Polysaccharid (PS) in fester Form zuzugeben, da die Viskosität zum einen schnellerabnimmt und außerdem das Polysaccharid als Feststoff aus praktischen Gründen leichter zu dosieren ist. Das restliche (Differenz zu 100 %) polymere Dispergiermittel (PD) kann in beliebiger Weise zugegeben werden, beispielsweise am Ende der Zugabe des Polysaccharids (PS) oder auch parallel zur Zugabe des Polysaccharids (PS).

Es hat sich herausgestellt, dass es vorteilhaft ist, wenn ein Überschuss an polymeren Dispergiermittel (PD) gegenüber dem Polysaccharid (PS) zu Beginn des Verfahrens vorliegt, da auf diese Weise im Schritt a) Dispersionen mit besonders niedriger Viskosität erhalten werden können. Es ist am meisten bevorzugt, dass 95 bis 100 %, besonders bevorzugt 100%, des eingesetzten polymeren Dispergiermittels (PD) vorgelegt werden und anschließend das Polysaccharid (PS) zugegeben wird.

Bevorzugt ist ein Verfahren, wobei im Verfahrensschritt a) die Herstellung der wässrigen Dispersion, dadurch geschieht, dass eine wässrige Lösung des polymeren Dispergiermittels (PD), welche mehr als 70 %, bevorzugt mehr als 80 %, insbesondere bevorzugt mehr als 90 %, des eingesetzten polymeren Dispergiermittels (PD) umfasst, vorgelegt wird und zu der wässrigen Lösung des polymeren Dispergiermittels (PD) das Polysaccharid (PS) zugegeben wird, bevorzugt wird das Polysaccharid (PS) portionsweise zugegeben. Der Begriff portionsweise Zugabe bedeutet bevorzugt, dass weniger als 50 % des Polysaccharids (PS) auf einmal zugegeben werden, besonders bevorzugt, dass weniger als 30 % des Polysaccharids (PS) auf einmal zugegeben werden. Besonders bevorzugt bedeutet der Begriff portionsweise Zugabe, dass die Zugabe des Polysaccharids (PS) über einen Zeitraum von mindestens 5 Minuten erfolgt, besonders bevorzugt 5 bis 15 Minuten.

Bevorzugt ist ein Verfahren, wobei im Verfahrensschritt a) die Herstellung der wässrigen Dispersion, dadurch geschieht, dass eine wässrige Lösung des polymeren Dispergiermittels (PD), welche mehr als 70 %, bevorzugt mehr als 80 %, insbesondere bevorzugt mehr als 90 %, des eingesetzten polymeren Dispergiermittels (PD) umfasst, vorgelegt wird und zu der wässrigen Lösung des polymeren Dispergiermittels (PD) das Polysaccharid (PS) zugegeben wird, bevorzugt wird das Polysaccharid (PS) unter Rühren der vorgelegten Dispersion zugegeben, besonders bevorzugt portionsweise und unter Rühren der vorgelegten Dispersion.

Im Verfahrensschritt a) wird eine Dispersion mit einer Viskosität der Dispersion geringer als 10.000 mPa·s, enthalten. Diese enthält das mindestens eine polymere Dispergiermittel (PD) und das mindestens eine Polysaccharid (PS).

Bevorzugt ist ein Verfahren, wobei das Polysaccharid (PS) a) ein Celluloseether ist und ausgewählt ist aus der Gruppe Alkylcellulosen, Hydroxyalkylcellulosen oder Alkylhydroxyalkylcellulosen oder b) ein nichtionischer Stärkeether ist, c) ein mikrobiologisch hergestelltes Polysaccharid ist, d) ein natürlich vorkommendes Polysaccharid ist, bevorzugt natürlich vorkommend und pflanzlichen Ursprungs, oder e) ein Polysaccharid ist, welches aus Fungus Kulturen gewonnen wird, wobei jeweils eines oder mehrere der vorstehend unter a) bis e) genannten Polysaccharide eingesetzt werden. Als Beispiel für über Fungus Kulturen produzierte Polysaccharide (PS) ist Schizophyllan zu nennen. Es können eines oder auch mehrere der vorstehend genannten Typen a) bis e) von Polysacchariden, sowohl als auch mehrere Vertreter dieser Typen eingesetzt werden.

Das c) mikrobiologisch hergestelltes Polysaccharid ist bevorzugt gegenüber den a) Celluloseethern und gegenüber den b) nichtionischen Stärkeethern. Bevorzugt ausgewählt ist das c) mikrobiologisch hergestellte Polysaccharid ausgewählt aus der Gruppe welan gum, xanthan gum oder diutan gum, wobei die jeweiligen Polysaccharide einzeln oder in Mischungen verwendet werden können.

Als Polysaccharid (PS) ist diutan gum und/oder xanthan gum bevorzugt, insbesondere bevorzugt ist diutan gum.

Bevorzugt ist ein Verfahren, wobei das das Gewichtsverhältnis von polymerem Dispergiermittel (PD) zu Polysaccharid (PS) von 10/1 bis 50/1 beträgt.

Bevorzugt ist ein Verfahren, wobei der Wassergehalt der wässrigen Dispersion aus polymerem Dispergiermittel (PD) und Polysaccharid (PS) aus dem Schritt a) größer ist als 35 Gew.-% und kleiner ist als 65 Gew.-%.

Bevorzugt ist ein Verfahren wobei in der wässrigen Dispersion aus polymerem Dispergiermittel (PD) und Polysaccharid (PS) des Schritts a) die Summe der Gewichtsanteile aus PD und PS bezogen auf das Gewicht der gesamten wässrigen Dispersion mindestens 30 Gew.-% beträgt, bevorzugt mindestens 35 Gew.-%.

Bevorzugt ist ein Verfahren, wobei die wässrige Dispersion des Schritts a), enthaltend das oder die polymeren Dispergiermittel (PD) und das oder die Polysaccharid(e), weniger als 5 Gew.-% anorganische Substanzen mit einer Oberflächenladung größer als 4 e⁻/nm²- enthält.

Bevorzugt ist ein Verfahren, wobei die wässrige Dispersion des Schritts a), enthaltend das oder die polymeren Dispergiermittel (PD) und das oder die Polysaccharid(e), weniger als 5 Gew.-% Calcium Silikat Hydrat enthält.

Die Erfindung betrifft auch pulverförmigen Zusammensetzungen, erhalten aus einem der erfindungsgemäßen Verfahren.

Die Erfindung betrifft auch Baustoffzusammensetzungen, enthaltend die pulverförmigen Zusammensetzungen, erhalten aus dem erfindungsgemäßen Verfahren und anorganische Bindemittel ausgewählt aus der Gruppe Zement, Calciumsulfat-Hemihydrat, Anhydrit, Hüttensand, Flugasche, Silikastaub, Metakaolin, natürliche Puzzolane, gebrannte Ölschiefer, Calcium-Aluminat-Zement oder Calciumsulfoaluminatzement, wobei in den Baustoffmischungen eines oder mehrere der genannten Bindemittel vorliegen.

Die Erfindung betrifft auch die Verwendung der erfindungsgemäßen pulverförmigen Zusammensetzungen als rheologisches Additiv, bevorzugt zur Verhinderung von Segregation, für Zement, Calciumsulfat hemihydrat, Anhydrit, Hüttensand, Flugasche, Silikastaub, Metakaolin, natürliche Puzzolane, gebrannte Ölschiefer, Calcium-Aluminat-Zement oder Calciumsulfoaluminatzement enthaltende Baustoffmischungen, wobei in den Baustoffmischungen eines oder mehrere der genannten Bindemittel vorliegen. Bevorzugt handelt es sich bei den Baustoffmischungen um fließfähige Spachtelmassen oder Fließestriche. Vorteil der erfindungsgemäßen pulverförmigen Zusammensetzungen ist, dass insbesondere in fließfähigen Systemen, wie bspw. fließfähigen Spachtelmassen und Fließestrichen eine Segregation (sogenanntes Bluten der Baustoffmischung) vermieden werden kann.

Die bevorzugte Dosierung der erfindungsgemäßen pulverförmigen Zusammensetzungen beträgt 0,05 Gew.-% bezogen auf das Bindemittel, bevorzugt auf Zement.

Bevorzugt sind Baustoffmischungen, welche als hydraulisches Bindemittel Zement enthalten oder mehr als 10 Gew.-% Zement enthalten.

Die Erfindung betrifft auch die Verwendung der erfindungsgemäßen pulverförmigen Zusammensetzungen zur Herstellung von Trockenmörtelmischungen, um ein Entmischen des polymeren Dispergiermittels (PD) und des Polysaccharids (PS) im Trockenmörtel zu verhindern.

### Beispiele

PCE 1: Ein Kammpolymer aus ethoxyliertem Hydroxybutylvinylether (3000 g/mol) und Acrylsäure im Verhältnis 10/1. Ladungsdichte 2,688 meq/g.

PCE 2: Ein Kammpolymer aus ethoxyliertem Hydroxybutylvinylether (3000 g/mol) und Acrylsäure im Verhältnis 5/1. Ladungsdichte 1,488. meq/g.

PCE 3: Ein Kammpolymer aus ethoxyliertem Hydroxybutylvinylether (3000 g/mol) und Acrylsäure im Verhältnis 2/1. Ladungsdichte 0,636 meq/g.

Polymer 4: Polymer hergestellt nach WO15091461 A1, Tabelle 1 Beispiel 7.

Für Beispiel 1 wurden in eine 50 Gew.-%-ige Lösung von PCE 1 10 Gew.-% eines Pulvers von Kelco-Crete DG-F (Diutangum, erhältlich bei CP Kelco), bezogen auf den Feststoff der PCE 1-Lösung, eingerührt. Die entstehende Suspension (Formulierung A) wurde anschließend unter Verwendung einer Zweistoffdüse in einem Mobile Minor TYP MM-I von GEA sprühgetrocknet (Eingangstemperatur 220°C, Ausgangstemperatur 98°C). Die Viskositäten wurden mittels eines Brookfield-Viskosimeters (Spindel LV1) bei 20 °C gemessen.

**Tabelle 1**

| | Viskosität (20°C) |
|---|---|
| PCE 1 (50 Gew.-%) | 230 mPas |
| Kelco-Crete DG-F (10 Gew.-%) | >10000 mPas |
| Formulierung A | 232 mPas |

Das entstandene Pulver wurde in einer Mörtelrezeptur einer ternären Selbstverlaufsmasse (siehe Tabelle 2) gegen eine physikalische Mischung der Komponenten PCE 2 und Kelco-Crete DG-F (Vergleichsbeispiel 1) nach DIN EN 12706 getestet. Das Wasser/Binderverhältnis war w/b = 0,6. Die beiden Pulverkomposite (physikalische Mischung und Cotrocknung) wurden 24 h in einer Kunststoffflasche auf einem Rütteltisch gestellt. Anschließend wurden bei beiden eine Probe von oben und eine Probe von unten durch eingestanzte Öffnungen in die Flasche mit einem Spatel entnommen und gegeneinander getestet. Die Ergebnisse des Fließmaßes nach 8 min und die Auslaufzeit des Ford-Cups DIN Nr. 4 sind in Tabelle 3 aufgetragen.

**Tabelle 2**

| | Massenanteile |
|---|---|
| Portlandzement (Milke CEM I 52,5 N) | 18,5 |
| Tonerdezement (Kerneos Fondu) | 11,5 |
| CaSO₄ (CAB 30) Calciumsulfatbinder | 6,5 |
| Quartzsand H33 | 41,43 |
| Kalksteinmehl (Omyacarb 15 AL) | 19,4 |
| Redispersionspulver (Vinnapas 5023 L) | 2 |
| Lithiumcarbonat | 0,1 |
| Vinapor DF 9010 | 0,1 |
| Weinsäure BCK | 0,03 |
| Pulverkomposit | 0,34 |

**Tabelle 3**

| | | Fließmaß nach 8 min in cm | Auslaufzeit |
|---|---|---|---|
| Ohne Rütteln | Beispiel 1 (Erfindungsgemäß) | 15,9 | 68 sec |
| | Physikalische Mischung (Vergleichsbeispiel 1) | 15,7 | 63 sec |
| Nach 24 h auf der Rüttelplatte | Beispiel 1: Probe von oben | 15,9 | 67 sec |
| | Beispiel 1: Probe von unten | 15,8 | 68 sec |
| | Vergleichsbeispiel 1 Physikalische Mischung: oben | 16,3 | 59 sec |
| | Vergleichsbeispiel 1 Physikalische Mischung: unten | 12,8 | Nicht bestimmbar |

Um die breite Anwendbarkeit wurden weitere Flüssigmischungen hergestellt und wenn möglich daraus Pulverproben mittels Sprühtrocknung hergestellt. Die Herstellung erfolgte analog Beispiel 1. Die Flüssigproben wurden jeweils auf einen Feststoffgehalt von 50 Gew.-% eingestellt.

**Tabelle 4**

| Versuch | Dispergiermittel | Verdickungsmittel | Viskosität (mPas) |
|---|---|---|---|
| 1* | PCE 2 (10 Gew.-%) ** | Kelco-Crete DG-F (90 Gew.-%) | >10000 |
| 2* | PCE 2 (20 Gew.-%) | Kelco-Crete DG-F (80 Gew.-%) | >10000 |
| 3 | PCE 2 (50 Gew.-%) | Kelco-Crete DG-F (50 Gew.-%) | 500 |
| 4 | PCE 2 (75 Gew.-%) | Kelco-Crete DG-F (25 Gew.-%) | 250 |
| 5 | PCE 2 (98 Gew.-%) | Kelco-Crete DG-F (2 Gew.-%) | 180 |
| 6 | PCE 2 (90 Gew.-%) | Kelco-Crete DG-F (10 Gew.-%) | 230 |
| 7 | PCE 1 (90 Gew.-%) | Kelco-Crete DG-F (10 Gew.-%) | 210 |
| 8 | Polymer 4 (90 Gew.-%) | Kelco-Crete DG-F (10 Gew.-%) | 160 |
| 9 | PCE 2 (90 Gew.-%) | Culminal C-4053 (10 Gew.-%) | 190 |
| 10 | PCE 2 (90 Gew.-%) | Walocel MKX 6000 (10 Gew.-%) | 180 |
| 11* | PEG 1000 (90 Gew.-%) | Kelco-Crete DG-F (10 Gew.-%) | >10000 |
| 12* | PCE 2 (90 Gew.-%) | Starvis (Polyacrylamid) (10 Gew.-%) | >10000 |

| | | | |
|---|---|---|---|
| * Vergleichsbeispiele ** Die Angaben der Gew.-% in der Tabelle beziehen sich auf den Feststoff in den Flüssigproben | | | |

Bei Culminal C-4053 handelt es sich um eine Methylcellulose erhältlich von Ashland Bei Walocel MKX 6000 handelt es sich um eine Methyl Hydroxypropylcellulose erhältlich von DOW.

Alle getrockneten Proben wurden auf dem Rütteltisch für 24 Stunden gerüttelt und anschließend Mittels Raman-Spektroskopie auf ihre Zusammensetzung und Sedimentationsstabilität vermessen. Als Signale für die Polyether wurden die Signale bei 1475 cm⁻¹ und 1280 cm⁻¹ verwendet und integriert. Bei keiner der Proben konnte eine örtliche Anreicherung einer Komponente beobachtet werden.

Die Pulver der Versuche 4, 5, 8 und 9 wurden in einer ternären Rezeptur nach Tabelle 2 wie in Beispiel 1 ausgetestet. Die Dosierung wurde entsprechend auf identischen Fließmittelgehalt angepasst.

**Tabelle 5**

| | Fließmaß | Auslaufzeit |
|---|---|---|
| Versuch 4 | 15,3 cm | 63 sec |
| Versuch 5 | 15,2 cm | 58 sec |
| Versuch 9 | 14,9 cm | 67 sec |

Das Pulver aus Versuch 8, Tabelle 4 wurde ebenfalls in einer ternären Rezeptur nach Tabelle 2 untersucht. Aufgrund der niedrigeren Dosiereffizienz des Polymers 4 in dieser Anwendung wurde die Dosierung des Pulverkomposit auf 0,46 Massenanteile angehoben. Das cogetrocknete Polymer wurde mit der physikalischen Mischung verglichen.

**Tabelle 6**

| | | Fließmaß nach 8 min in cm | Auslaufzeit |
|---|---|---|---|
| Ohne Rütteln | Beispiel 8 (Erfindungsgemäß) | 15,3 | 61 sec |
| | Physikalische Mischung (Vergleichsbeispiel 8) | 15,9 | 65 sec |
| Nach 24 h auf der Rüttelplatte | Beispiel 8: Probe von oben | 15,9 | 62 sec |
| | Beispiel 8: Probe von unten | 15,2 | 63 sec |
| | Vergleichsbeispiel 8 physikalische Mischung: oben | 16,3 | 59 sec |
| | Vergleichsbeispiel 8 physikalische Mischung: unten | 12,4 | Nicht bestimmbar |

## Patentansprüche

1. Verfahren zur Herstellung einer pulverförmigen Zusammensetzung enthaltend mindestens ein polymeres Dispergiermittel (PD), welches mindestens eine Struktureinheit umfassend anionische Gruppen und/oder mindestens eine Struktureinheit umfassend anionogene Gruppen sowie mindestens eine Struktureinheit mit Polyetherseitenketten umfasst, und mindestens ein Polysaccharid (PS), wobei das Gewichtsverhältnis von polymerem Dispergiermittel (PD) zu Polysaccharid (PS) von 2/1 bis 50/1 beträgt und die pulverförmige Zusammensetzung zu mindestens 65 Gew.-% aus dem polymeren Dispergiermittel besteht und folgende Verfahrensschritte durchgeführt werden:
a) Herstellung einer wässrigen Dispersion mit einer Viskosität der Dispersion geringer als 10.000 mPa·s (gemessen mittels eines Brookfield-Viskosimeters (Spindel LV1) bei 20 °C), enthaltend das mindestens eine polymere Dispergiermittel (PD) und das mindestens eine Polysaccharid (PS),
b) Sprühtrocknung der im Verfahrensschritt a) hergestellten wässrigen Dispersion.

2. Verfahren nach Anspruch 1, wobei das polymere Dispergiermittel (PD) ein Polymer ist, das erhalten wurde durch Polymerisation mindestens eines Monomers, das mindestens eine anionische und/oder mindestens eine anionogene Gruppe aufweist, und mindestens eines Monomers, das mindestens eine Polyetherseitenkette umfasst.

3. Verfahren nach Anspruch 2, wobei das polymere Dispergiermittel (PD) mindestens eine Struktureinheit der allgemeinen Formeln (Ia), (Ib), (Ic) oder (Id) aufweist: 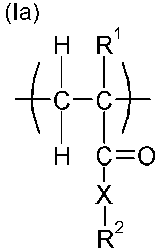 worin
R¹ für H oder eine unverzweigte oder verzweigte C₁-C₄-Alkylgruppe, CH₂COOH oder CH₂CO-X-R³ steht;
X für NH-(CₙH₂ₙ) oder O-(CₙH₂ₙ) mit n = 1, 2, 3 oder 4 oder für eine chemische Bindung steht, wobei das Stickstoffatom bzw. das Sauerstoffatom an die CO-Gruppe gebunden ist;
R² für OM, PO₃M₂, oder O-PO₃M₂ steht; mit der Maßgabe, dass X für eine chemische Bindung steht, wenn R² für OM steht;
R³ für PO₃M₂, oder O-PO₃M₂ steht; 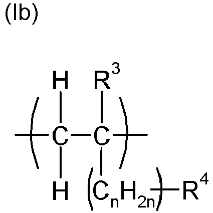
worin
R³ für H oder eine unverzweigte oder verzweigte C₁-C₄-Alkylgruppe steht;
n für 0, 1, 2, 3 oder 4 steht;
R⁴ für PO₃M₂, oder O-PO₃M₂ steht; 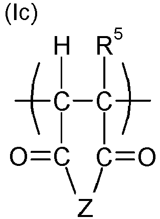
worin
R⁵ für H oder eine unverzweigte oder verzweigte C₁-C₄-Alkylgruppe steht;
Z für O oder NR⁷ steht; und
R⁷ für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
n für 1, 2, 3 oder 4 steht; 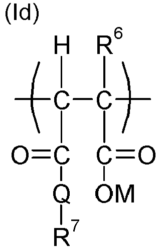
worin
R⁶ für H oder eine unverzweigte oder verzweigte C₁-C₄-Alkylgruppe steht;
Q für NR⁷ oder O steht;
R⁷ für H, (CₙH₂ₙ)-OH, (CₙH₂ₙ)-PO₃M₂, (CₙH₂ₙ)-OPO₃M₂, (C₆H₄)-PO₃M₂, oder (C₆H₄)-OPO₃M₂ steht,
n für 1, 2, 3 oder 4 steht; und
wobei jedes M unabhängig voneinander für H oder ein Kationäquivalent steht.

4. Verfahren nach einem der vorhergehenden Ansprüche, wobei das polymere Dispergiermittel (PD) mindestens eine Struktureinheit der allgemeinen Formeln (IIa), (IIb), (IIc) oder (IId) aufweist: 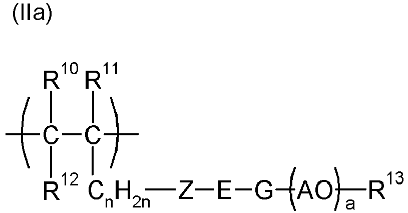 worin
R¹⁰, R¹¹ und R¹² unabhängig voneinander für H oder eine unverzweigte oder verzweigte C₁-C₄-Alkylgruppe stehen;
Z für O oder S steht;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht;
G für O, NH oder CO-NH steht; oder
E und G gemeinsam für eine chemische Bindung stehen;
A für CₓH₂ₓ mit x = 2, 3, 4 oder 5 oder CH₂CH(C₆H₅) steht;
n für 0, 1, 2, 3, 4 und/oder 5 steht;
a für eine ganze Zahl von 2 bis 350 steht;
R¹³ für H, eine unverzweigte oder verzweigte C₁-C₄-Alkylgruppe, CO-NH₂ und/oder COCH₃ steht; 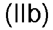 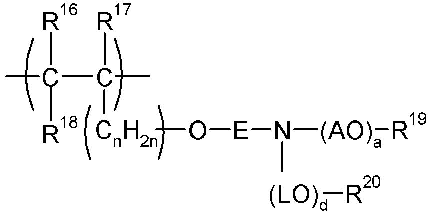
worin
R¹⁶, R¹⁷ und R¹⁸ unabhängig voneinander für H oder eine unverzweigte oder verzweigte C₁-C₄-Alkylgruppe stehen;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht oder für eine chemische Bindung steht;
A für CₓH₂ₓ mit x = 2, 3, 4 oder 5 oder CH₂CH(C₆H₅) steht;
L für CₓH₂ₓ mit x = 2, 3, 4 oder 5 oder CH₂-CH(C₆H₅) steht;
a für eine ganze Zahl von 2 bis 350 steht;
d für eine ganze Zahl von 1 bis 350 steht;
R¹⁹ für H oder eine unverzweigte oder verzweigte C₁-C₄-Alkylgruppe steht;
R²⁰ für H oder eine unverzweigte oder verzweigte C₁-C₄-Alkylgruppe steht; und
n für 0, 1, 2, 3, 4 oder 5 steht; 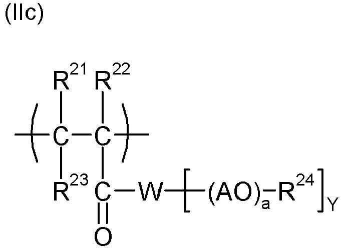
worin
R²¹, R²² und R²³ unabhängig voneinander für H oder eine unverzweigte oder verzweigte C₁-C₄-Alkylgruppe stehen;
W für O, NR²⁵, N steht
Y für 1 steht, wenn W = O oder NR²⁵, und für 2 steht, wenn W = N;
A für CₓH₂ₓ mit x = 2, 3, 4 oder 5 oder CH₂CH(C₆H₅) steht;
a für eine ganze Zahl von 2 bis 350 steht;
R²⁴ für H oder eine unverzweigte oder verzweigte C₁-C₄-Alkylgruppe steht;
R²⁵ für H oder eine unverzweigte oder verzweigte C₁-C₄-Alkylgruppe steht; 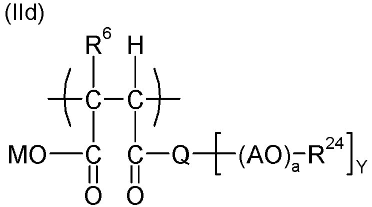
worin
R⁶ für H oder eine unverzweigte oder verzweigte C₁-C₄-Alkylgruppe steht;
Q für NR¹⁰, N oder O steht;
Y für 1 steht, wenn Q = O oder NR¹⁰ und für 2 steht, wenn Q = N;
R¹⁰ für H oder eine unverzweigte oder verzweigte C₁-C₄-Alkylgruppe steht;
A für CₓH₂ₓ mit x = 2, 3, 4 oder 5, oder CH₂C(C₆H₅)H steht;
R²⁴ für H oder eine unverzweigte oder verzweigte C₁-C₄-Alkylgruppe steht;
M für H oder ein Kationäquivalent steht; und
a für eine ganze Zahl von 2 bis 350 steht.

5. Verfahren nach Anspruch 2, wobei das polymere Dispergiermittel (PD) mindestens ein Polymer umfasst, das ein Polykondensationsprodukt ist, welches Struktureinheiten (III) und (IV) umfasst: 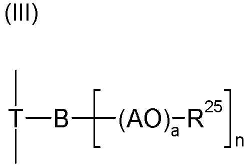 worin
T für einen substituierten oder unsubstituierten Phenylrest, einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind aus N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für CₓH₂ₓ mit x = 2, 3, 4 oder 5 oder CH₂CH(C₆H₅) steht;
a für eine ganze Zahl von 1 bis 300 steht;
R²⁵ für H, einen verzweigten oder unverzweigten C₁- bis C₁₀-Alkylrest, C₅- bis C₈-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb): 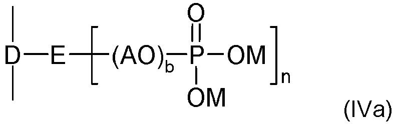 worin
D für einen substituierten oder unsubstituierten Phenylrest, einen substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind aus N, O und S, steht;
E für N, NH oder O steht, mit der Maßgabe, dass m für 2 steht, wenn E für N steht und der Maßgabe, dass m für 1 steht, wenn E für NH oder O steht;
A für CₓH₂ₓ mit x = 2, 3, 4 oder 5 oder CH₂CH(C₆H₅) steht;
b für eine ganze Zahl von 1 bis 300 steht;
M unabhängig voneinander für H oder ein Kationäquivalent stehen; 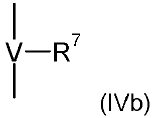
worin
V für einen substituierten oder unsubstituierten Phenylrest oder einen substituierten oder unsubstituierten Naphthylrest steht; R⁷ für COOM, OCH₂COOM, SO₃M oder OPO₃M₂ steht;
M für H oder ein Kationäquivalent steht;
wobei die erwähnten Phenyl-, Naphthyl- oder heteroaromatischen Reste gegebenenfalls durch 1 oder zwei Reste substituiert sind, die ausgewählt sind aus R⁸, OH, OR⁸, (CO)R⁸, COOM, COOR⁸, SO₃R⁸ und NO₂; und
R⁸ für C₁-C₄-Alkyl, Phenyl, Naphthyl, Phenyl-C₁-C₄-alkyl oder C₁-C₄-Alkylphenyl steht.

6. Verfahren nach einem der vorangehenden Ansprüche, wobei die Ladungsdichte des mindestens einen polymeren Dispergiermittels (PD) von 1,65 mEq/g bis 10,0 mEq/g beträgt.

7. Verfahren nach einem der vorangehenden Ansprüche, wobei im Verfahrensschritt a) die Herstellung der wässrigen Dispersion dadurch geschieht, dass eine wässrige Lösung des mindestens einen polymeren Dispergiermittels (PD), welche mehr als 70 %, bevorzugt mehr als 80 %, des eingesetzten mindestens einen polymeren Dispergiermittels (PD) umfasst, vorgelegt wird und zu der wässrigen Lösung des mindestens einen polymeren Dispergiermittels (PD) das mindestens eine Polysaccharid (PS) zugegeben wird, bevorzugt wird das Polysaccharid (PS) in fester Form zugegeben.

8. Verfahren nach einem der vorangehenden Ansprüche, wobei das Polysaccharid (PS) a) ein Celluloseether ist und ausgewählt ist aus der Gruppe Alkylcellulosen, Hydroxyalkylcellulosen oder Alkylhydroxyalkylcellulosen oder b) ein nichtionischer Stärkeether ist, oder c) ein mikrobiologisch hergestelltes Polysaccharid ist, wobei jeweils eines oder mehrere der vorstehend genannten Polysaccharide eingesetzt werden.

9. Verfahren nach einem der vorangehenden Ansprüche, wobei der Wassergehalt der wässrigen Dispersion aus polymerem Dispergiermittel (PD) und Polysaccharid (PS) aus dem Schritt a) größer ist als 35 Gew.-% und kleiner ist als 65 Gew.-%.

10. Verfahren nach einem der vorangehenden Ansprüche, wobei die wässrige Dispersion des Schritts a), enthaltend das oder die polymeren Dispergiermittel (PD) und das oder die Polysaccharid(e), weniger als 5 Gew.-% Calcium Silikat Hydrat enthält.

11. Pulverförmige Zusammensetzung, erhalten aus einem der Verfahren gemäß den Ansprüchen 1 bis 10.

12. Baustoffzusammensetzung, enthaltend die pulverförmige Zusammensetzung gemäß Anspruch 11 und mindestens ein anorganisches Bindemittel ausgewählt aus der Gruppe Zement, Calciumsulfat-Hemihydrat, Anhydrit, Hüttensand, Flugasche, Silikastaub, Metakaolin, natürliche Puzzolane, gebrannte Ölschiefer, Calcium-Aluminat-Zement oder Calciumsulfoaluminatzement.

13. Verwendung der pulverförmigen Zusammensetzung nach Anspruchs 11 als rheologisches Additiv für Zement, Calciumsulfat-Hemihydrat, Anhydrit, Hüttensand, Flugasche, Silikastaub, Metakaolin, natürliche Puzzolane, gebrannte Ölschiefer, Calcium-Aluminat-Zement oder Calciumsulfoaluminatzement enthaltende Baustoffmischungen, wobei in den Baustoffmischungen eines oder mehrere der genannten Bindemittel vorliegen.

14. Verwendung der pulverförmigen Zusammensetzung des Anspruchs 11 zur Herstellung von Trockenmörtelmischungen, um ein Entmischen des polymeren Dispergiermittels (PD) und des Polysaccharids (PS) im Trockenmörtel zu verhindern.

## Claims

1. A process for producing a pulverulent composition comprising at least one polymeric dispersant (PD) which comprises at least one structural unit comprising anionic groups and/or at least one structural unit comprising anionogenic groups and also at least one structural unit having polyether side chains, and at least one polysaccharide (PS), wherein the weight ratio of polymeric dispersant (PD) to polysaccharide (PS) is from 2/1 to 50/1 and the pulverulent composition consists to an extent of at least 65% by weight of the polymeric dispersant and the following process steps are performed:
a) production of an aqueous dispersion having a viscosity of the dispersion of less than 10 000 mPa·s (measured by means of a Brookfield viscometer (spindle LV1) at 20°C), comprising the at least one polymeric dispersant (PD) and the at least one polysaccharide (PS),
b) spray drying of the aqueous dispersion produced in process step a).

2. The process according to claim 1, wherein the polymeric dispersant (PD) is a polymer that has been obtained by means of polymerization of at least one monomer having at least one anionic and/or at least one anionogenic group and of at least one monomer comprising at least one polyether side chain.

3. The process according to claim 2, wherein the polymeric dispersant (PD) has at least one structural unit of general formulae (Ia), (Ib), (Ic) or (Id): 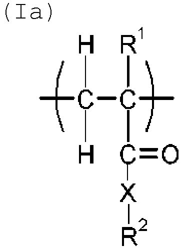 in which
R¹ is H or an unbranched or branched C₁-C₄-alkyl group, CH₂COOH or CH₂CO-X-R³;
X is NH- (CₙH₂ₙ) or O-(CₙH₂ₙ) with n = 1, 2, 3 or 4 or is a chemical bond, wherein the nitrogen atom or the oxygen atom is bonded to the CO group;
R² is OM, PO₃M₂, or O-PO₃M₂; with the proviso that X is a chemical bond when R² is OM;
R³ is PO₃M₂, or O-PO₃M₂; 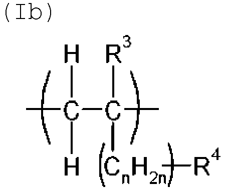
in which
R³ is H or an unbranched or branched C₁-C₄-alkyl group;
n is 0, 1, 2, 3 or 4;
R⁴ is PO₃M₂, or O-PO₃M₂; 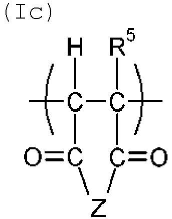
in which
R⁵ is H or an unbranched or branched C₁-C₄-alkyl group;
Z is O or NR⁷; and
R⁷ is H, (CₙH₂ₙ) -OH, (CₙH₂ₙ) -PO₃M₂, (CₙH₂ₙ) -OPO₃M₂, (C₆H₄)-PO₃M₂, or (C₆H₄) -OPO₃M₂,
n is 1, 2, 3 or 4; 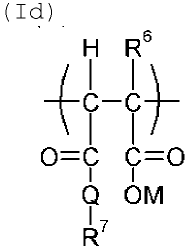
in which
R⁶ is H or an unbranched or branched C₁-C₄-alkyl group;
Q is NR⁷ or O;
R⁷ is H, (CₙH₂ₙ) -OH, (CₙH₂ₙ) -PO₃M₂, (CₙH₂ₙ) -OPO₃M₂, (C₆H₄)-PO₃M₂, or (C₆H₄) -OPO₃M₂,
n is 1, 2, 3 or 4; and
where each M is independently H or one cation equivalent.

4. The process according to any of the preceding claims, wherein the polymeric dispersant (PD) has at least one structural unit of general formulae (IIa), (IIb), (IIc) or (IId): 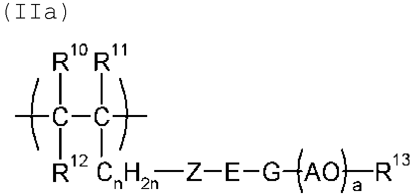 in which
R¹⁰, R¹¹ and R¹² are each independently H or an unbranched or branched C₁-C₄-alkyl group;
Z is O or S;
E is an unbranched or branched C₁-C₆-alkylene group, a cyclohexylene group, CH₂-C₆H₁₀, 1,2-phenylene, 1,3-phenylene, or 1,4-phenylene;
G is O, NH or CO-NH; or
E and G together are a chemical bond;
A is CₓH₂ₓ with x = 2, 3, 4 or 5 or CH₂CH(C₆H₅);
n is 0, 1, 2, 3, 4 and/or 5;
a is an integer from 2 to 350;
R¹³ is H, an unbranched or branched C₁-C₄-alkyl group, CO-NH₂ and/or COCH₃; 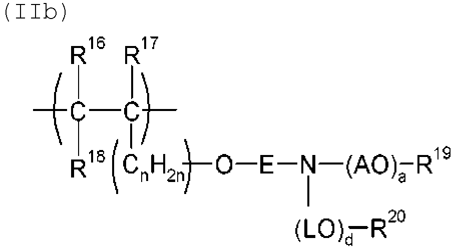
in which
R¹⁶, R¹⁷ and R¹⁸ are each independently H or an unbranched or branched C₁-C₄-alkyl group;
E is an unbranched or branched C₁-C₆-alkylene group, a cyclohexylene group, CH₂-C₆H₁₀, 1,2-phenylene, 1,3-phenylene, or 1,4-phenylene, or is a chemical bond;
A is CₓH₂ₓ with x = 2, 3, 4 or 5 or CH₂CH(C₆H₅);
L is CₓH₂ₓ with x = 2, 3, 4 or 5 or CH₂-CH(C₆H₅);
a is an integer from 2 to 350;
d is an integer from 1 to 350;
R¹⁹ is H or an unbranched or branched C₁-C₄-alkyl group; R²⁰ is H or an unbranched or branched C₁-C₄-alkyl group; and
n is 0, 1, 2, 3, 4 or 5; 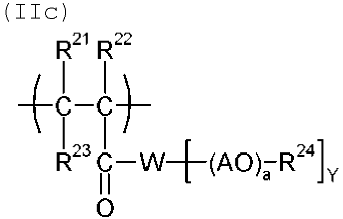
in which
R²¹, R²² and R²³ are each independently H or an unbranched or branched C₁-C₄-alkyl group;
W is O, NR²⁵, N
Y is 1 when W = O or NR²⁵, and is 2 when W = N;
A is CₓH₂ₓ with x = 2, 3, 4 or 5 or CH₂CH(C₆H₅);
a is an integer from 2 to 350;
R²⁴ is H or an unbranched or branched C₁-C₄-alkyl group;
R²⁵ is H or an unbranched or branched C₁-C₄-alkyl group; 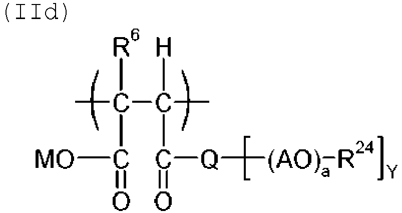
in which
R⁶ is H or an unbranched or branched C₁-C₄-alkyl group;
Q is NR¹⁰, N or O;
Y is 1 when Q = O or NR¹⁰, and is 2 when Q = N;
R¹⁰ is H or an unbranched or branched C₁-C₄-alkyl group;
A is CₓH₂ₓ with x = 2, 3, 4 or 5, or CH₂C(C₆H₅)H;
R²⁴ is H or an unbranched or branched C₁-C₄-alkyl group;
M is H or one cation equivalent; and
a is an integer from 2 to 350.

5. The process according to claim 2, wherein the polymeric dispersant (PD) comprises at least one polymer which is a polycondensation product comprising structural units (III) and (IV): 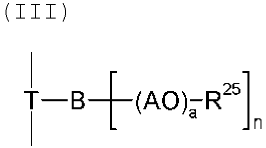 in which
T is a substituted or unsubstituted phenyl radical, a substituted or unsubstituted naphthyl radical or a substituted or unsubstituted heteroaromatic radical having 5 to 10 ring atoms, of which 1 or 2 atoms are heteroatoms selected from N, O and S;
n is 1 or 2;
B is N, NH or O, with the proviso that n is 2 when B is N and the proviso that n is 1 when B is NH or O;
A is CₓH₂ₓ with x = 2, 3, 4 or 5 or CH₂CH(C₆H₅);
a is an integer from 1 to 300;
R²⁵ is H, a branched or unbranched C₁- to C₁₀-alkyl radical, C₅- to C₈-cycloalkyl radical, aryl radical or hetaryl radical having 5 to 10 ring atoms, of which 1 or 2 atoms are heteroatoms selected from N, O and S;
where the structural unit (IV) is selected from the structural units (IVa) and (IVb): 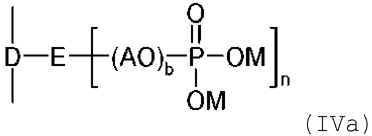 in which
D is a substituted or unsubstituted phenyl radical, a substituted or unsubstituted naphthyl radical or a substituted or unsubstituted heteroaromatic radical having 5 to 10 ring atoms, of which 1 or 2 atoms are heteroatoms selected from N, O and S;
E is N, NH or O, with the proviso that m is 2 when E is N and the proviso that m is 1 when E is NH or O;
A is CₓH₂ₓ with x = 2, 3, 4 or 5 or CH₂CH(C₆H₅);
b is an integer from 1 to 300;
M is independently H or one cation equivalent; 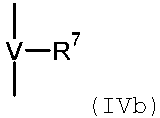 in which
V is a substituted or unsubstituted phenyl radical or a substituted or unsubstituted naphthyl radical;
R⁷ is COOM, OCH₂COOM, SO₃M or OPO₃M₂;
M is H or one cation equivalent;
where the phenyl, naphthyl or heteroaromatic radicals mentioned are optionally substituted by 1 or two radicals selected from R⁸, OH, OR⁸, (CO)R⁸, COOM, COOR⁸, SO₃R⁸ and NO₂; and
R⁸ is C₁-C₄-alkyl, phenyl, naphthyl, phenyl-C₁-C₄-alkyl or C₁-C₄-alkylphenyl.

6. The process according to any of the preceding claims, wherein the charge density of the at least one polymeric dispersant (PD) is from 1.65 mEq/g to 10.0 mEq/g.

7. The process according to any of the preceding claims, wherein in process step a) the aqueous dispersion is produced by initially charging an aqueous solution of the at least one polymeric dispersant (PD) which comprises more than 70%, preferably more than 80%, of the at least one polymeric dispersant (PD) used, and adding the at least one polysaccharide (PS) to the aqueous solution of the at least one polymeric dispersant (PD), preference being given to adding the polysaccharide (PS) in solid form.

8. The process according to any of the preceding claims, wherein the polysaccharide (PS) a) is a cellulose ether and is selected from the group of alkyl celluloses, hydroxyalkyl celluloses or alkyl hydroxyalkyl celluloses or b) is a nonionic starch ether, or c) is a microbiologically produced polysaccharide, one or more of the abovementioned polysaccharides being used in each case.

9. The process according to any of the preceding claims, wherein the water content in the aqueous dispersion of polymeric dispersant (PD) and polysaccharide (PS) from step a) is greater than 35% by weight and is less than 65% by weight.

10. The process according to any of the preceding claims, wherein the aqueous dispersion of step a), comprising the polymeric dispersant(s) (PD) and the polysaccharide(s), comprises less than 5% by weight of calcium silicate hydrate.

11. A pulverulent composition obtained from one of the processes according to claims 1 to 10.

12. A building material composition comprising the pulverulent composition according to claim 11 and at least one inorganic binder selected from the group of cement, calcium sulfate hemihydrate, anhydrite, slag sand, fly ash, silica dust, metakaolin, natural pozzolans, burnt oil shale, calcium aluminate cement or calcium sulfoaluminate cement.

13. The use of the pulverulent composition according to claim 11 as a rheological additive for building material mixtures comprising cement, calcium sulfate hemihydrate, anhydrite, slag sand, fly ash, silica dust, metakaolin, natural pozzolans, burnt oil shale, calcium aluminate cement or calcium sulfoaluminate cement, one or more of the binders mentioned being present in the building material mixtures.

14. The use of the pulverulent composition of claim 11 for the production of dry mortar mixtures in order to prevent separation of the polymeric dispersant (PD) and of the polysaccharide (PS) in the dry mortar.

## Revendications

1. Procédé de préparation d'une composition sous forme de poudre contenant au moins un dispersant polymère (PD), qui comprend au moins un motif structural comprenant des groupes anioniques et/ou au moins un motif structural comprenant des groupes anionogènes ainsi qu'au moins un motif structural comprenant des chaînes latérales de polyéther, et au moins un polysaccharide (PS), le rapport pondéral de dispersant polymère (PD) à polysaccharide (PS) valant 2/1 à 50/1 et la composition sous forme de poudre étant constituée du dispersant polymère à raison d'au moins 65% en poids, et les étapes de procédé suivantes étant réalisées :
a) préparation d'une dispersion aqueuse présentant une viscosité de la dispersion inférieure à 10.000 mPa.s (mesurée au moyen d'un viscosimètre de Brookfield (module LV1) à 20°C), contenant ledit au moins un dispersant polymère (PD) et ledit au moins un polysaccharide (PS),
b) séchage par pulvérisation de la dispersion aqueuse préparée dans l'étape de procédé a).

2. Procédé selon la revendication 1, le dispersant polymère (PD) étant un polymère qui a été obtenu par polymérisation d'au moins un monomère, qui présente au moins un groupe anionique et/ou au moins un groupe anionogène, et d'au moins un monomère qui comprend au moins une chaîne latérale de polyéther.

3. Procédé selon la revendication 2, le dispersant polymère (PD) présentant au moins un motif structural des formules générales (Ia), (Ib), (Ic) ou (Id) : 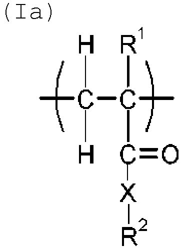 dans laquelle
R¹ représente H ou un groupe C₁-C₄-alkyle non ramifié ou ramifié, CH₂COOH ou CH₂CO-X-R³ ;
X représente NH-(CₙH₂ₙ) ou O-(CₙH₂ₙ), où n = 1, 2, 3 ou 4, ou une liaison chimique, l'atome d'azote ou, selon le cas, l'atome d'oxygène étant lié au groupe CO ;
R² représente OM, PO₃M₂ ou O-PO₃M₂ ; à condition que X représente une liaison chimique lorsque R² représente OM ;
R³ représente PO₃M₂ ou O-PO₃M₂ ; 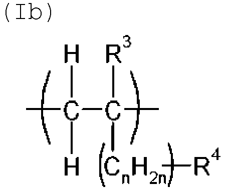
dans laquelle
R³ représente H ou un groupe C₁-C₄-alkyle non ramifié ou ramifié ;
n représente 0, 1, 2, 3 ou 4 ;
R⁴ représente PO₃M₂ ou O-PO₃M₂ ; 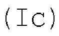 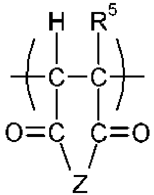
dans laquelle
R⁵ représente H ou un groupe C₁-C₄-alkyle non ramifié ou ramifié ;
Z représente O ou NR⁷ ; et
R⁷ représente H, (CₙH₂ₙ) -OH, (CₙH₂ₙ) -PO₃M₂, (CₙH₂ₙ) -OPO₃M₂, (C₆H₄) -PO₃M₂ ou (C₆H₄) -OPO₃M₂,
n représente 1, 2, 3 ou 4 ; 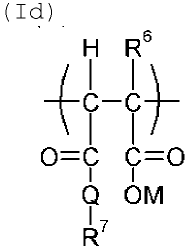
dans laquelle
R⁶ représente H ou un groupe C₁-C₄-alkyle non ramifié ou ramifié ;
Q représente NR⁷ ou O ;
R⁷ représente H, (CₙH₂ₙ)-OH, (CₙH₂ₙ)-PO₃M₂, (CₙH₂ₙ)-OPO₃M₂, (C₆H₄) -PO₃M₂ ou (C₆H₄) -OPO₃M₂,
n représente 1, 2, 3 ou 4 ; et
chaque M représentant, indépendamment l'un de l'autre, H ou un équivalent cationique.

4. Procédé selon l'une des revendications précédentes, le dispersant polymère (PD) présentant au moins un motif structural des formules générales (IIa), (IIb), (IIc) ou (IId) : 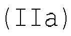 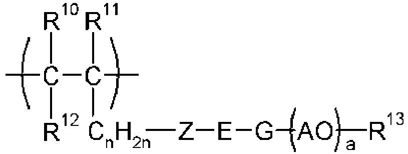 dans laquelle
R¹⁰, R¹¹ et R¹² représentent, indépendamment les uns des autres, H ou un groupe C₁-C₄-alkyle non ramifié ou ramifié ;
Z représente O ou S ;
E représente un groupe C₁-C₆-alkylène non ramifié ou ramifié, un groupe cyclohexylène, CH₂-C₆H₁₀, 1,2-phénylène, 1,3-phénylène ou 1,4-phénylène ;
G représente O, NH ou CO-NH ; ou
E et G représentent, ensemble, une liaison chimique ;
A représente CₓH₂ₓ, où x = 2, 3, 4 ou 5, ou CH₂CH(C₆H₅) ;
n représente 0, 1, 2, 3, 4 et/ou 5 ;
a représente un nombre entier de 2 à 350 ;
R¹³ représente H, un groupe C₁-C₄-alkyle non ramifié ou ramifié, CO-NH₂ et/ou COCH₃ ; 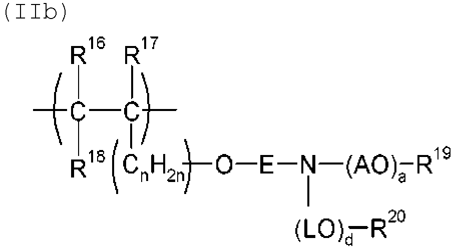
dans laquelle
R¹⁶, R¹⁷ et R¹⁸ représentent, indépendamment les uns des autres, H ou un groupe C₁-C₄-alkyle non ramifié ou ramifié ;
E représente un groupe C₁-C₆-alkylène non ramifié ou ramifié, un groupe cyclohexylène, CH₂-C₆H₁₀, 1,2-phénylène, 1,3-phénylène ou 1,4-phénylène ou représente une liaison chimique ;
A représente CₓH₂ₓ, où x = 2, 3, 4 ou 5, ou CH₂CH(C₆H₅) ;
L représente CₓH₂ₓ, où x = 2, 3, 4 ou 5, ou CH₂-CH(C₆H₅);
a représente un nombre entier de 2 à 350 ;
d représente un nombre entier de 1 à 350 ;
R¹⁹ représente H ou un groupe C₁-C₄-alkyle non ramifié ou ramifié ;
R²⁰ représente H ou un groupe C₁-C₄-alkyle non ramifié ou ramifié ; et
n représente 0, 1, 2, 3, 4 ou 5 ; 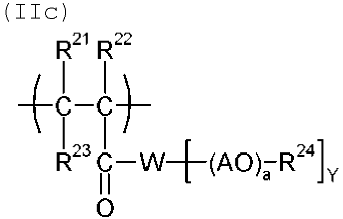
dans laquelle
R²¹, R²² et R²³ représentent, indépendamment les uns des autres, H ou un groupe C₁-C₄-alkyle non ramifié ou ramifié ;
W représente O, NR²⁵, N
Y représente 1 lorsque W = O ou NR²⁵ et représente 2 lorsque W = N ;
A représente CₓH₂ₓ, où x = 2, 3, 4 ou 5, ou CH₂CH(C₆H₅) ;
a représente un nombre entier de 2 à 350 ;
R²⁴ représente H ou un groupe C₁-C₄-alkyle non ramifié ou ramifié ;
R²⁵ représente H ou un groupe C₁-C₄-alkyle non ramifié ou ramifié ; 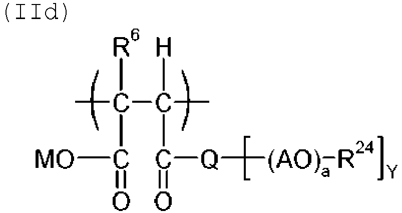
dans laquelle
R⁶ représente H ou un groupe C₁-C₄-alkyle non ramifié ou ramifié ;
Q représente NR¹⁰, N ou O ;
Y représente 1 lorsque Q = O ou NR¹⁰ et représente 2 lorsque Q = N ;
R¹⁰ représente H ou un groupe C₁-C₄-alkyle non ramifié ou ramifié ;
A représente CₓH₂ₓ, où x = 2, 3, 4 ou 5, ou CH₂C(C₆H₅)H ;
R²⁴ représente H ou un groupe C₁-C₄-alkyle non ramifié ou ramifié ;
M représente H ou un équivalent cationique ; et
a représente un nombre entier de 2 à 350 ;

5. Procédé selon la revendication 2, le dispersant polymère (PD) comprenant au moins un polymère qui est un produit de polycondensation qui comprend les motifs structuraux (III) et (IV) : 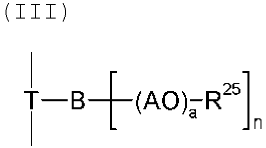 dans laquelle
T représente un radical phényle substitué ou non substitué, un radical naphtyle substitué ou non substitué ou un radical hétéroaromatique substitué ou non substitué comprenant 5 à 10 atomes de cycle, dont 1 ou 2 atomes sont des hétéroatomes qui sont choisis parmi N, O et S ;
n représente 1 ou 2 ;
B représente N, NH ou O, à condition que n représente 2 lorsque B représente N et à condition que n représente 1 lorsque B représente NH ou O ;
A représente CₓH₂ₓ, où x = 2, 3, 4 ou 5, ou CH₂CH(C₆H₅) ; a représente un nombre entier de 1 à 300 ;
R²⁵ représente H, un radical C₁-C₁₀-alkyle ramifié ou non ramifié, un radical C₅-C₈-cycloalkyle, un radical aryle ou un radical hétéroaryle comprenant 5 à 10 atomes de cycle, dont 1 ou 2 atomes sont des hétéroatomes qui sont choisis parmi N, O et S ;
le motif structural (IV) étant choisi parmi les motifs structuraux (IVa) et (IVb) : 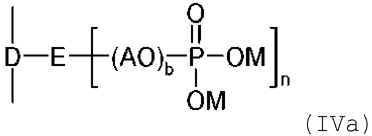
dans laquelle
D représente un radical phényle substitué ou non substitué, un radical naphtyle substitué ou non substitué ou un radical hétéroaromatique substitué ou non substitué comprenant 5 à 10 atomes de cycle, dont 1 ou 2 atomes sont des hétéroatomes qui sont choisis parmi N, O et S ;
E représente N, NH ou O, à condition que m représente 2 lorsque E représente N et à condition que m représente 1 lorsque E représente NH ou O ;
A représente CₓH₂ₓ, où x = 2, 3, 4 ou 5, ou CH₂CH(C₆H₅) ;
b représente un nombre entier de 1 à 300 ;
M représente, indépendamment, H ou un équivalent cationique ; 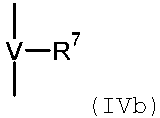
dans laquelle
V représente un radical phényle substitué ou non substitué ou un radical naphtyle substitué ou non substitué ;
R⁷ représente COOM, OCH₂COOM, SO₃M ou OPO₃M₂ ;
M représente H ou un équivalent cationique ;
les radicaux phényle, naphtyle ou hétéroaromatiques mentionnés étant le cas échéant substitués par 1 ou deux radicaux qui sont choisis parmi R⁸, OH, OR⁸, (CO)R⁸, COOM, COOR⁸, SO₃R⁸ et NO₂ ; et
R⁸ représente C₁-C₄-alkyle, phényle, naphtyle, phényl-C₁-C₄-alkyle ou C₁-C₄-alkylphényle.

6. Procédé selon l'une des revendications précédentes, la densité de charge dudit au moins un dispersant polymère (PD) valant 1,65 mEq/g à 10,0 mEq/g.

7. Procédé selon l'une des revendications précédentes, dans lequel, dans l'étape de procédé a), la préparation de la dispersion aqueuse est réalisée en ce qu'une solution aqueuse dudit au moins un dispersant polymère (PD), qui comprend plus de 70%, de préférence plus de 80%, dudit au moins un dispersant polymère utilisé, est disposée au préalable et ledit au moins un polysaccharide (PS est ajouté à la solution aqueuse dudit au moins un dispersant polymère (PD), le polysaccharide (PS) étant de préférence ajouté sous forme solide.

8. Procédé selon l'une des revendications précédentes, le polysaccharide (PS) étant a) un éther de cellulose et choisi dans le groupe des alkylcelluloses, des hydroxyalkylcelluloses ou des alkylhydroxyalkylcelluloses ou b) un éther d'amidon non ionique ou c) un polysaccharide préparé par voie microbiologique, à chaque fois un ou plusieurs des polysaccharides susmentionnés pouvant être utilisés.

9. Procédé selon l'une des revendications précédentes, la teneur en eau de la dispersion aqueuse constituée par le dispersant polymère (PD) et le polysaccharide (PS) de l'étape a) étant supérieure à 35% en poids et inférieure à 65% en poids.

10. Procédé selon l'une des revendications précédentes, la dispersion aqueuse de l'étape a), contenant le ou les dispersants polymères (PD) et le ou les polysaccharides, contenant moins de 5% en poids de silicate de calcium hydraté.

11. Composition sous forme de poudre, obtenue par l'un des procédés selon les revendications 1 à 10.

12. Composition de matériau de construction, contenant la composition sous forme de poudre selon la revendication 11 et au moins un liant inorganique choisi dans le groupe constitué par le ciment, le sulfate de calcium hémihydraté, l'anhydrite, le laitier granulé, les cendres volantes, la poussière de silice, le métakaolin, les pouzzolanes naturelles, le schiste bitumineux calciné, le ciment d'aluminate de calcium ou le ciment de sulfoaluminate de calcium.

13. Utilisation de la composition sous forme de poudre selon la revendication 11 comme additif rhéologique pour des mélanges de matériau de construction contenant du ciment, du sulfate de calcium hémihydraté, de l'anhydrite, du laitier granulé, des cendres volantes, de la poussière de silice, du métakaolin, des pouzzolanes naturelles, du schiste bitumineux calciné, du ciment d'aluminate de calcium ou du ciment de sulfoaluminate de calcium, un ou plusieurs des liants mentionnés se trouvant dans les mélanges de matériau de construction.

14. Utilisation de la composition sous forme de poudre de la revendication 11 pour préparer des mélanges de mortier sec, afin d'empêcher une séparation du mélange du dispersant polymère (PD) et du polysaccharide (PS) dans le mortier sec.
